# EUROPÄISCHE PATENTANMELDUNG

(11) **EP 0 895 827 A2**
(43) Veröffentlichungstag der Anmeldung: **10.02.1999**
(21) Anmeldenummer: 98112282.3
(22) Anmeldetag: 02.07.1998
(51) Int. Cl.: B23K 9/20

(54) **Bolzenhalter für einen Bolzenschweisskopf**

(30) Priorität: 07.08.1997 DE 19734191
(71) Anmelder: TRW NELSON BOLZENSCHWEISSTECHNIK GMBH & CO. KG, 58285 Gevelsberg (DE)
(72) Erfinder: Kreider, Hans, 35435 Wettenberg (DE); Knorn, Ulrich, 58091 Hagen (DE); Henkel, Berthold, 58285 Gevelsberg (DE)
(74) Vertreter: Schieschke, Klaus, Dipl.-Ing.

(57) **Zusammenfassung**

Die Erfindung betrifft einen Bolzenhalter für einen Bolzenschweißkopf, welcher an seinem rückwärtigen Ende einen Befestigungsbereich aufweist, mit welchem der Bolzenhalter mit einer Pinole eines Bolzenschweißkopfs verbindbar ist, welcher einen mit dem Befestigungsbereich verbundenen, sich gegenüber dem Befestigungsbereich radial versetzt in im Wesentlichen axialer Richtung verlaufenden mittleren Bereich aufweist, und welcher an seinem vorderen Ende einen mit dem mittleren Bereich verbundenen Haltebereich für ein zu verschweißendes Teil aufweist, wobei das zu verschweißende Teil im Haltebereich im Wesentlichen in der Achse der Pinole fixierbar ist und wobei ein Kopfbereich des zu verschweißenden Teils in einen zwischen Befestigungsbereich, mittleren Bereich und Haltebereich gebildeten axialen Aufnahmebereich aufnehmbar ist.

## Beschreibung

Die Erfindung betrifft einen Bolzenhalter für einen Bolzenschweißkopf sowie ein mittels dieses Bolzenhalters verschweißbares Schweißteil.

Die Aufgabe eines Bolzenhalters besteht darin, ein zu verschweißendes Teil derart an einen Bolzenschweißkopf zu halten, dass dieses mit ausreichender Positionier- und Lagegenauigkeit mit dem betreffenden Werkstück verschweißt werden kann. Das zu verschweißende Teil muss insbesondere so gehalten werden, dass es während seiner Bewegung zusammen mit dem Bolzenhalter und der damit gekoppelten Pinole des Schweißkopfs nicht in seiner Lage relativ zum Bolzenhalter (in axialer Richtung) verschoben wird. Denn hierdurch würden wesentliche Schweißparameter, beispielsweise die voreingestellte Eintauchtiefe verändert. Dies würde zu negativen Beeinflussungen der Schweißqualität der fertigen Verbindung führen. Um das Verschweißen unterschiedlicher Bolzentypen bzw. Bolzengrößen mit einem einzigen Schweißkopf zu ermöglichen, müssen Bolzenhalter austauschbar mit dem Schweißkopf verbindbar sein.

Des Weiteren erfüllt der Bolzenhalter die Aufgabe, den für das Bolzenschweißen benötigten hohen Schweißstrom auf den Bolzen zu übertragen.

Bekannte Bolzenhalter bestehen in der Regel aus einem im Wesentlichen hohlzylindrischen Körper, dessen Innendurchmesser zumindest im vorderen Bereich des Bolzenhalters bis auf einen Wert abnimmt, der geringfügig unter dem maximalen Außendurchmesser des zu verschweißenden Bolzens bzw. Bolzenstyps liegt. Durch das Vorsehen von achsparallelen Schlitzen entstehen im vorderen Bereich des Bolzenhalters radial federnde Segmente, welche beim Einschieben eines Bolzens in Richtung auf das vordere Ende des Bolzenhalters in radialer Richtung auseinandergedrückt werden. Der eingeschobene Bolzen wird dabei mit einer Federkraft beaufschlagt, die ausreichende Reibungskräfte erzeugt, um den Bolzen gegen ein unbeabsichtigtes axiales Verschieben während des Schweißvorgangs zu sichern.

Während derartige Bolzenhalter vor allem für Bolzenschweißköpfe einsetzbar sind, die an einem Schweißroboter angeordnet sind und automatisch von hinten in axialer Richtung mit einem zu verschweißenden Bolzen bestückt werden, finden bei als Schweißpistole ausgebildeten Schweißköpfen solche Bolzenhalter Verwendung, die manuell von vorne her bestückbar sind. Derartige Bolzenhalter können ebenfalls im Wesentlichen als hohlzylindrisches Teil ausgebildet sein und im vorderen Bereich axiale Schlitze aufweisen, so dass in der vorstehend beschriebenen Weise radial federnde Zungen entstehen, die einen von vorne her eingeschobenen Bolzen beaufschlagen. Zusätzlich kann hierbei im Inneren des Bolzenhalters ein Anschlag oder eine Anschlagschulter vorgesehen sein, um einen Bolzen in axialer Richtung definiert einsetzen zu können.

Derartige Bolzenhalter eignen sich jedoch im Wesentlichen nur für rotationssymmetrisch zu ihrer Längsachse ausgebildete Bolzen bzw. zu verschweißende Teile. Komplizierter aufgebaute Schweißteile, insbesondere solche mit einem speziellen unsymmetrischen Teil lassen sich mit derartigen Bolzenhaltern nicht verschweißen.

Der Erfindung liegt daher die Aufgabe zugrunde, einen Bolzenhalter für einen Bolzenschweißkopf zu schaffen, mit welchem auch zu verschweißende Teile mit nicht-rotationssymmetrischer Struktur, insbesondere mit einem nicht-rotationssymmetrischen Kopfteil verschweißbar sind. Des Weiteren liegt der Erfindung die Aufgabe zugrunde ein mit dem Bolzenhalter schnell und einfach verschweißbares Schweißteil in Form eines Kabelhalters zu schaffen.

Die Erfindung löst diese Aufgabe mit den Merkmalen der Patentansprüche 1 bzw. 6.

Die Erfindung löst sich von der bisherigen Vorstellung, dass ein Bolzenhalter eine Symmetrie zu dessen Längsachse aufweisen muss. Er weist einen zwischen einem rückwärtigen Befestigungsbereich und einen vorderen Haltebereich angeordneten mittleren Bereich auf, welcher in radialer Richtung gegenüber der Längsachse des Bolzenhalters nach außen versetzt ist. Der vordere Haltebereich, der mit dem mittleren Bereich verbunden ist, ist wiederum so ausgebildet, dass das zu verschweißende Teil mit seiner Längsachse (zumindest im vorderen Bereich des Schweißteils) fluchtend mit der Längsachse des Bolzenhalters gehalten wird. Hierdurch wird, wie auch im Fall üblicher Bolzenhalter und damit zu verschweißender rotationssymmetrischer Teile, der Vorteil erreicht, dass die Beaufschlagung des zu verschweißenden Teils mit der die Bewegung des zu verschweißenden Teils bewirkenden Kraft in der Achse des die Bewegung bewirkenden Teils (der Pinole des Schweißkopfs) erfolgt. Hierdurch werden keinerlei Kippmomente auf die Pinole des Schweißkopfs übertragen.

An dieser Stelle sei bemerkt, dass im vorliegenden Text unter Schweißkopf jede Vorrichtung für das Bolzenschweißen bezeichnet ist, unabhängig davon, ob es sich um eine an einem Schweißroboter befestigte oder eine manuell dehnbare Vorrichtung handelt. Unter Pinole sei in gleicher Weise jedes Element eines derart allgemein zu verstehenden Bolzenschweißkopfs bezeichnet, welches die für den Schweißvorgang erforderliche axiale Bewegung des Bolzenhalters bewirkt.

Die bevorzugte Ausführungsform des erfindungsgemäßen Bolzenhalters weist einen Haltebereich bzw. ein Halteelement auf, welches einander gegenüberliegend angeordnete Klemmbacken für das Fixieren des zu verschweißenden Teils besitzt. Dabei ist mindestens einer der beiden Klemmbacken in im Wesentlichen radialer Richtung federnd ausgebildet. Auf diese Weise kann ein zu verschweißendes Teil einfach in radialer Richtung zwischen die beiden Klemmbacken eingedrückt werden. Der Aufnahmebereich des erfindungsgemäßen Schweißkopfs muss durch das Vorsehen eines entsprechend großen radialen Versatzes des mittleren Bereichs gegenüber der Längsachse des Bolzenhalters (und einer entsprechenden axialen Ausdehnung) selbstverständlich so groß ausgebildet sein, dass das zu verschweißende Teil mit seinem Kopf in den so gebildeten Aufnahmebereich aufgenommen werden kann.

Durch das Vorsehen einer axial verlaufenden Nut im Haltebereich des Bolzenhalters derart, dass das zu verschweißende Teil bei einer Beaufschlagung durch die beiden Klemmbacken in die Nut hineingedrückt wird, ergibt sich der Vorteil einer verbesserten Halterung und Führung des zu verschweißenden Teils.

Bei der bevorzugten Ausführungsform der Erfindung ist am mittleren Bereich des Bolzenhalters ein axial verschiebbares und fixierbares Anschlagteil angeordnet. Dies kann so eingestellt werden, dass ein in den Haltebereich des Bolzenhalters eingesetztes Schweißteil in axialer Richtung gegen die Unterseite des Anschlagteils bewegt werden kann und auf diese Weise in axialer Richtung schnell und einfach in die für den Schweißvorgang optimale Halteposition gebracht werden kann.

Bei einer Ausführungsform der Erfindung ist der mittlere Bereich um eine mit der Pinolenachse fluchtende Achse drehbar mit dem Befestigungsbereich verbunden. Auf diese Weise ergibt sich der Vorteil, dass insbesondere bei manuell zu bedienenden Schweißköpfen (z. B. Schweißpistolen) bei einem Schweißen an schwer zugänglichen Positionen der mittlere Bereich und der Haltebereich des Bolzenhalters durch einfache Drehung in eine Position gebracht werden können, in der das Verschweißen des Teils erfolgen kann, ohne dass hierzu eine Drehung des gesamten Bolzenschweißkopfs erforderlich wäre.

Ein Schweißteil, das sich insbesondere für das Verschweißen mit einem derartigen Bolzenschweißkopf eignet, weist die Merkmale des Anspruchs 6 auf. Hierbei handelt es sich um ein Halteelement für Kabel oder dergleichen, welches einen einfachen, geradlinig verlaufenden Schweißbereich aufweist, der mit seinem vorderen Ende mit einem Werkstück verschweißbar ist. Am rückwärtigen Ende des Schweißbereichs ist in an sich bekannter Weise ein im Wesentlichen kreisförmig ausgebildeter Haltebereich für ein Kabel ausgebildet, wobei die Ebene des Haltebereichs mit dem Schweißbereich einen vorbestimmten spitzen Winkel einschließt bzw. schraubenförmig ausgebildet ist.

Der Haltebereich weist vorzugsweise einen Umschlingungswinkel von ca. 300° auf.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine Seitenansicht (Fig. 1a) eines Schweißteils für das Halten eines Kabels sowie eine Draufsicht des Teils (Fig. 1b);
- Fig.2: einen insbesondere für das Verschweißen des Schweißteils in Fig. 1 geeigneten Bolzenhalter in einer teilweise aufgebrochenen Seitenansicht (Fig. 2a) sowie einer Ansicht von unten (Fig. 2b);

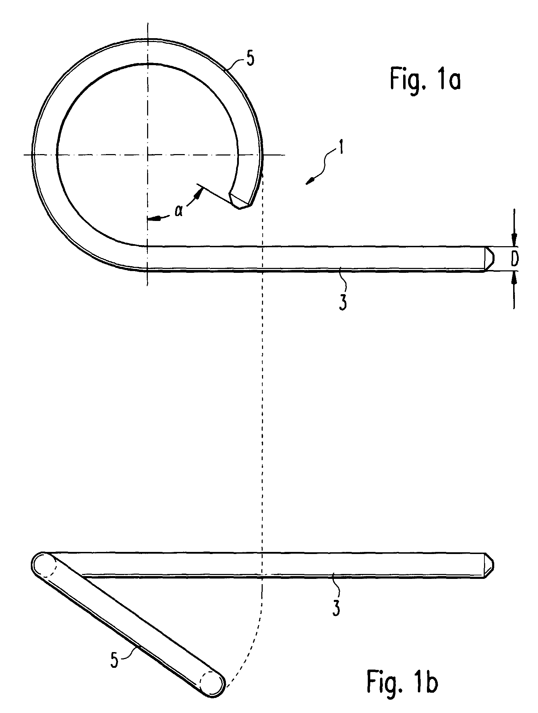

Die beiden Ansichten in Fig. 1 zeigen ein Schweißteil 1, welches zum Halten länglicher Gegenstände, insbesondere von Kabeln oder dergleichen, geeignet ist. Die in Fig. 1a dargestellte Seitenansicht zeigt, dass das Schweißteil 1 aus einem geradlinig verlaufenden Schweißbereich 3 und einem sich an dessen rückwärtigem Ende anschließenden Haltebereich 5 besteht.

Der Haltebereich 5 weist eine im Wesentlichen kreisförmige Struktur auf, die sich in radialer Richtung vom Schweißbereich 3 nach außen erstreckt. Der Öffnungswinkel α des Haltebereichs 5 beträgt ca. 60°. An seinem vorderen Ende weist der Schweißbereich 3 eine für das Bolzenschweißen übliche, konisch verlaufende Spitze auf.

Wie aus Fig. 1b ersichtlich, ist der Haltebereich zumindest mit einem Teilbereich aus der Zeichenebene der Fig. 1a hervorstehend ausgebildet, wobei es sich bei dem betreffenden Bereich um denjenigen Bereich handeln kann, der sich, ausgehend vom rückwärtigen Ende des Schweißbereichs 3 betrachtet, an den ersten Viertelkreis anschließt (vgl. Fig. 1b). Selbstverständlich kann der Haltebereich 5 jedoch auch bereits ausgehend vom rückwärtigen Ende des Schweißbereichs 3 schraubenförmig mit einer vorbestimmten Steigung ausgebildet sein.

Der Winkel, den die Ebene des sich an den ersten Viertelkreis anschließenden Bereichs des Haltebereichs 5 mit dem Schweißbereich 3 einschließt, kann, wie in Fig. 1b dargestellt, beispielsweise 35° betragen.

Das gesamte Schweißteil kann aus einem Draht hergestellt sein, welcher beispielsweise einen Durchmesser D von 6 mm aufweist.

Das in Fig. 1 dargestellte Schweißteil kann nicht mit üblichen rotationssymmetrisch ausgebildeten Bolzenhaltern verschweißt werden.

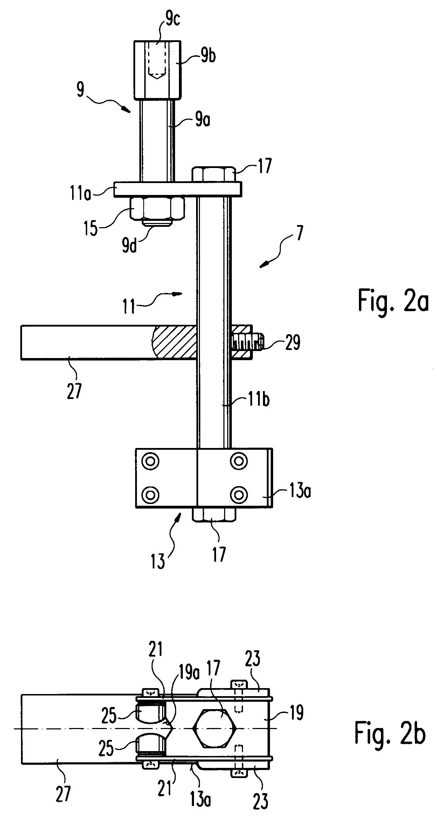

Hierzu eignet sich insbesondere der in Fig. 2 dargestellte Bolzenhalter 7, der einen Befestigungsbereich 9, einen damit verbundenen mittleren Bereich 11 und einen Haltebereich 13 aufweist, welcher seinerseits mit dem mittleren Bereich 11 verbunden ist. Der Befestigungsbereich 9 umfasst einen zylindrischen Stift 9a, in dessen oberem Bereich 9b eine Gewindebohrung 9c vorgesehen ist.

Das untere Ende des zylindrischen Stifts 9a weist einen mit einem Außengewinde versehenen Fortsatz 9d auf, welcher in eine entsprechende Bohrung eines sich in radialer Richtung erstreckenden Teils 11a des mittleren Bereichs 11 eingreift. Zur Befestigung des Teils 11a am zylindrischen Stift 9a ist auf den Fortsatz 9d eine Mutter 15 aufgeschraubt. Die Verbindung des sich in radialer Richtung erstreckenden Teils 11a mit dem zylindrischen Stift 9a kann, wie unten beschrieben, entweder drehfest oder drehbar ausgebildet sein.

Der mittlere Bereich 11 umfasst zusätzlich zu dem Teil 11a einen mit diesem drehfest verbundenen, sich in axialer Richtung erstreckenden Stift 11b, an dessen unterem Ende drehfest ein den Haltebereich 13 realisierendes Halteelement 13a angeordnet ist.

Die Verbindung des Stifts 11b mit dem Teil 11a bzw. dem Halteelement 13a kann, wie in Fig. 2a dargestellt, mittels Schrauben 17 erfolgen, welche in eine entsprechende Gewindebohrung im oberen bzw. unteren Ende des Stifts 11b eingreifen und durch entsprechende Bohrungen im Teil 11a bzw. im Haltelement 13a ragen.

Das Halteelement 13a weist, wie aus Fig. 2b ersichtlich, ein Tragteil 19 auf, welches durch die Schraube 17 mit dem Stift 11b verschraubt ist. An den beiden Längsseiten des Tragteils 13 ist jeweils eine Blattfeder 21 mittels jeweils eines Montageteils 23 befestigt. Jedes Montageteil 23 kann dabei, wie in den Fig. 2a und 2b dargestellt, mittels zweier Schrauben mit dem Tragteil 19 verbunden sein. Die freie Länge jeder Blattfeder 21 bestimmmt damit die Federkraft, mit welcher die jeweils am vorderen Ende jeder Blattfeder 21 befestigten Klemmbacken 25 aus ihrer Ruhestellung auslenkbar sind. Die Klemmbacken 25 weisen an ihren Innenseiten einen Abstand auf und sind so geformt, dass diese in Verbindung mit einer in axialer Richtung an der Vorderseite des Tragteils 19 ausgebildeten Nut 19a für das Fixieren eines zwischen die Nut 19a und die Klemmbacken 25 eingesetzten Schweißteils zusammenwirken. Die Nut 19a kann hierzu beispielsweise als V-Nut ausgebildet sein.

Die Klemmbacken können jeweils mit den vorderen Bereichen der Blattfedern 29 verschraubt sein. Zwischen den Klemmbacken 25 und den Blattfedern 21 können eine oder mehrere Distanzscheiben vorgesehen sein, um auf diese Weise den Abstand zwischen den Klemmbacken 25 und damit die Federkraft einzustellen, mit welcher ein Schweißteil beaufschlagt wird.

Am Stift 11b des mittleren Bereichs 11 kann ein in axialer Richtung des Stifts 11b verschiebbares Anschlagteil 27 angeordnet sein. Das Anschlagteil 27 kann, wie in Fig. 2 dargestellt, beispielsweise als rechteckförmige Platte ausgebildet sein, in deren rückwärtigem Ende eine Bohrung vorgesehen ist, deren Innendurchmesser im Wesentlichen dem Außendurchmesser des Stifts 11b entspricht. Das Feststellen des Anschlagteils 27 kann mittels einer Madenschraube 29 erfolgen, welche horizontal verlaufend in das rückwärtige Ende des Anschlagteils 27 eingreift.

Um ein Schweißteil, beispielsweise das in Fig. 1 dargestellte Schweißteil, in den Bolzenhalter gemäß Fig. 2 einzusetzen, muss das Schweißteil lediglich mit seinem Schweißbereich 3 in radialer Richtung in die Klemmbacken 25 eingedrückt werden und anschließend gegebenenfalls mit seinem oberen Ende (d.h. dem oberen Ende des Haltebereichs 5) gegen die Unterseite des Anschlagteils 27 gedrückt werden. Dabei ist zu beachten, dass der höchste Bereich des Schweißteils 1 im Bereich der Unterseite des Anschlagteils 27 liegt, da ansonsten keine korrekte axiale Position des Schweißteils 1 im Bolzenhalter 7 gewährleistet ist.

Bei einer drehfesten Verbindung des mittleren Bereichs 11 bzw. des Teils 11a mit dem Befestigungsbereich 9 bzw. dem Stift 9a muss für ein Verschweißen des Schweißteils 1 mit einer vorbestimmten Ausrichtung des Haltebereichs 5 der Schweißkopf gegebenenfalls um die Längsachse des Bolzenhalters in die enstprechende Lage gedreht werden.

Bei einer drehbaren Verbindung des Teils 11a bzw. des mittleren Bereichs 11 mit dem Stift 9a bzw. dem Befestigungsbereich 9 ist hierzu lediglich ein Drehen des mittleren Bereichs 11 zusammen mit dem Haltebereich 13 und dem bereits eingesetzten Schweißteils 1 erforderlich. Hierdurch wird die Handhabung wesentlich vereinfacht.

## Patentansprüche

1. Bolzenhalter für einen Bolzenschweißkopf
a) welcher an seinem rückwärtigen Ende einen Befestigungsbereich (9) aufweist, mit welchem der Bolzenhalter (7) mit einer Pinole eines Bolzenschweißkopfs verbindbar ist,
b) welcher einen mit dem Befestigungsbereich (9) verbundenen, sich gegenüber dem Befestigungsbereich (9) radial versetzt in im Wesentlichen axialer Richtung verlaufenden mittleren Bereich (11) aufweist, und
c) welcher an seinem vorderen Ende einen mit dem mittleren Bereich (11) verbundenen Haltebereich (13) für ein zu verschweißendes Teil (1) aufweist, wobei das zu verschweißende Teil (1) im Haltebereich (13) im Wesentlichen in der Achse der Pinole fixierbar ist und wobei ein Kopfbereich (5) des zu verschweißenden Teils (1) in einen zwischen Befestigungsbereich (9), mittleren Bereich (11) und Haltebereich (13) gebildeten axialen Aufnahmebereich aufnehmbar ist.

2. Bolzenhalter nach Anspruch 1, **dadurch gekennzeichnet**, dass der Haltebereich (13) durch ein Halteelement (13a) gebildet ist, welches zwei einander gegenüberliegend angeordnete Klemmbacken (25) für das Fixieren des zu verschweißenden Teils (1) aufweist, wobei mindestens einer der Klemmbacken (25) in im Wesentlichen radialer Richtung federnd ausgebildet ist.

3. Bolzenhalter nach Anspruch 1 oder 2, **dadurch gekennzeichnet**, dass im Haltebereich (13) eine axial verlaufende Nut (19a) zur Führung des zu verschweißenden Teils (1) vorgesehen ist.

4. Bolzenhalter nach einem der vorhergehenden Ansprüche, **dadurch gekennzeichnet**, dass am mittleren Bereich (11) ein axial verschiebbares und fixierbares Anschlagteil (27) angeordnet ist.

5. Bolzenhalter nach einem der vorhergehenden Ansprüche, **dadurch gekennzeichnet**, dass der mittlere Bereich (11) um eine mit der Pinolenachse fluchtende Achse drehbar mit dem Befestigungsbereich (9) verbunden ist.

6. Schweißteil für das Bolzenschweißen, welches einen gerade verlaufenden Schweißbereich (3) mit einer an dessen vorderem Ende vorgesehenen Schweißspitze und einen sich an dessen rückwärtigem Ende anschließenden Haltebereich (5) für ein Kabel oder dergleichen aufweist, wobei der Haltebereich (5) im Wesentlichen kreisförmig ausgebildet ist und die Ebene des Haltebereichs mit dem Schweißbereich einen vorbestimmten spitzen Winkel einschließt oder schraubenförmig ausgebildet ist.

7. Schweißteil nach Anspruch 6, **dadurch gekennzeichnet**, dass der Haltebereich (5) einen Öffnungswinkel von ca. 60° aufweist.
